# EUROPEAN PATENT SPECIFICATION

(11) **EP 2 463 575 B1**
(45) Date of publication and mention of the grant of the patent: **08.07.2015**
(21) Application number: 10806447.8
(22) Date of filing: 03.08.2010
(51) Int. Cl.: B60Q 1/00, F21S 8/10, B62J 6/00, B62J 6/02, G02B 6/00, F21V 8/00, G02B 6/42

(54) **LIGHTING DEVICE AND TWO-WHEELED MOTOR VEHICLE**
BELEUCHTUNGSVORRICHTUNG UND ZWEIRÄDRIGES MOTORFAHRZEUG
DISPOSITIF D ÉCLAIRAGE ET VÉHICULE MOTORISÉ À DEUX ROUES

(30) Priority: 04.08.2009 JP 2009181958
(43) Date of publication of application: 13.06.2012
(73) Proprietor: Yamaha Hatsudoki Kabushiki Kaisha, Iwata-shi, Shizuoka 438-8501 (JP)
(72) Inventor: ISAYAMA Hiroyuki, Iwata-shi Shizuoka 438-8501 (JP)
(74) Representative: Grünecker Patent- und Rechtsanwälte PartG mbB
(86) International application number: PCT/JP2010/063091
(87) International publication number: WO 2011/016448

(56) References cited:
- DE-A1-102005 008 634
- DE-A1-102006 008 717
- DE-A1-102007 033 711
- JP-A- 54 045 985
- JP-A- 2000 003 607
- JP-A- 2006 134 701
- JP-A- 2007 062 565
- JP-A- 2009 158 409
- JP-U- H0 287 303
- JP-U- H0 414 301
- JP-U- S5 469 791
- US-A1- 2002 181 236

## Description

### TECHNICAL FIELD

The present invention relates to lighting equipment and motorcycles. More specifically the invention relates to lighting equipment such as a flasher for indicating a direction in which a motorcycle is turning, and to a motorcycle including the same.

### BACKGROUND ART

An example of a conventional technique in this category is disclosed in Patent Document 1.

In the technique disclosed in Patent Document 1, a lens main body, which is an outer-shape part, includes a main lens and a lens extension. The lens extension has a lens-cut portion. With this arrangement, light is refracted by the lens-cut portion of the lens extension in a direction generally perpendicular to an outer surface of the lens main body, thereby creating a contrast of light.

In order to introduce light from a bulb into the lens extension, a case main body is provided with a groove portion. The groove portion has an end portion formed with a substantially U-shaped cutout portion, so that the light which has left the bulb and passed through the cutout portion and the groove portion is introduced into the lens extension. Therefore, the amount of light which is introduced into the lens extension is dependent on the area of opening of the cutout portion and of the groove portion, and there is a limited amount of light which is introduced from the bulb into the lens extension. Consequently, the lens extension is darker in comparison to the main lens portion.
Patent Document 1: JP-A 2006-134701
Patent Document 2: JP-A 2000-207912

### SUMMARY OF THE INVENTION

### PROBLEMS TO BE SOLVED BY THE INVENTION

The problem described above may be solved by increasing the area of opening of the cutout portion and of the groove portion to increase the amount of light introduced into the groove portion. In this case, however, a decrease must be made in the area which can be used for reflecting the light in the forward direction of the reflector, which means that the amount of light introduced into the more important main lens portion will be decreased.

Another possible solution would be to decrease the distance between the bulb which is the light source and the lens extension. However, it is difficult to make the lens main body closer to the bulb because the lens main body is a part which constitutes part of the motorcycle's outer shape. If, on the other hand, the bulb is made closer to the lens main body, the amount of light which is introduced directly into the lens extension may increase, but the distance between the bulb and the lens main body will be decreased, which will decrease the area of reflection surface of the reflector, resulting in decreased amount of light which is introduced into the main lens portion.

Patent Document 2 discloses vehicle lighting equipment for which has a prism cut (an equivalent of the lens-cut portion) on an inner side of a front-turn light-distribution section. In this technique, the prism cut illuminates a side-turn light-distribution section, thereby eliminating the need for a cutout to be provided in a reflection mirror.

If the above-described technique as disclosed in Patent Document 2, i.e., forming a lens-cut portion without providing a cutout, is applied to the arrangement in Patent Document 1, the lens main body, in which the lens-cut portion is formed, must be positioned at a more forward location. In order to do this, however, the shape of the lens main body, which is an outer-shape part, must be changed, therefore the arrangement reduces design freedom of the motorcycle outer shape.

Therefore, a primary object of the present invention is to provide lighting equipment which has an increased amount of light supplied to the side lens while reducing a decrease in the amount of light supplied in the forward direction and improving design freedom of the motorcycle outer shape, and to provide a motorcycle including the lighting equipment.

### MEANS FOR SOLVING THE PROBLEMS

The problems are solved by the lighting equipment according to claim 1.

30 According to an aspect of the present invention, there is provided lighting equipment for a motorcycle, including a bulb having a light emitting portion; a side lens provided laterally of the bulb; a reflector having a cutout for supplying part of light from the light emitting portion to the side lens while holding the bulb; and a lens cover covering the side lens while constituting part of an outer shape of the motorcycle.

In the present invention, the side lens is disposed more closely to the light emitting portion than is the lens cover which is an outer-shape part of the motorcycle. For this reason, the present invention makes it possible to increase the amount of light which is supplied directly from the light emitting portion to the side lens even if the cutout, which is provided for introducing light into the side lens, is not given an increased area of opening. Also, since it is not necessary to increase the cutout, there is no large decrease in the amount of light which is reflected by the reflector, namely, in the amount of light supplied in the forward direction. Further, it is possible to design the lens cover, which is an outer-shape part of the motorcycle, without depending upon the shape of the bulb or of the side lens, which means that the present invention improves design freedom of the outer shape of the motorcycle.

Preferably, the lighting equipment further includes a front lens provided in front of the bulb and covered by the lens cover; and a lens frame disposed inside the lens cover and attached to the front lens and to the side lens. With this arrangement, the lens frame has a partitioning portion provided like a connection between the front lens and the side lens. Human perception of brightness is based on relativity. For example, when a side lens is adjacent to a front lens which is brighter than the side lens, the brightness of the side lens is determined on the basis of relative brightness between the front lens and the side lens, and the side lens is perceived as dark. However, if a partitioning portion is provided like a connection between the front lens and the side lens, namely, if a partitioning portion is provided between the front lens and the side lens, brightness of the side lens is determined on the basis of relative brightness between the partitioning portion and the side lens, and the side lens looks bright. Therefore, there is a clear contrast between the partitioning portion and the side lens, leading to improved visual recognition of the side lens. Also, the arrangement makes it possible to emit light from two positions which are partitioned from each other, with a small number of parts, i.e., with only one bulb.

Further preferably, the lens cover has a curved surface. In this case, the arrangement makes it possible to reduce air resistance on a surface of the lighting equipment and thereby to form a smooth air flow on the surface of the lighting equipment.

Further, preferably, the lighting equipment further includes a housing having the reflector, and the housing further has a groove extending from the cutout in parallel to the side lens. In this case, the arrangement makes it possible to introduce light from the light emitting portion efficiently to the side lens via the cutout and the groove while reducing a halo around the side lens.

Preferably, the groove has a surface coated with a color for reducing reflection of light. In this case, the arrangement makes it easy to tell whether the bulb is turned on or off.

Further preferably, the side lens has a lens cut for reducing forward delivery of light after the light from the bulb has entered the side lens. In this case, the arrangement makes it possible to reduce light thrown in the forward direction, and thereby relatively increase light delivered in lateral directions. Therefore, in the motorcycle equipped with the lighting equipment, the arrangement makes it possible to improve visual recognition of the lighting equipment when the motorcycle is seen from a side.

Further, preferably, the lighting equipment further includes a front lens provided in front of the bulb and covered by the lens cover. With the arrangement, the front lens and the side lens are separate members from each other. In this case, the arrangement increases freedom in the shape of the lens cut of the side lens in comparison to cases where the front lens and the side lens are formed as a single, integrated member.

Preferably, the side lens has a light entrance portion extending toward the bulb, and the side lens extends rearward from the light entrance portion. In this case, light from the bulb which has entered the light entrance portion travels through the side lens toward the rear end of the side lens. The arrangement makes it possible to emit light from a wide range of the side lens. Therefore, in the motorcycle equipped with the lighting equipment, the arrangement makes it possible to improve visual recognition of the lighting equipment further when the motorcycle is viewed from a side.

Further preferably, the lighting equipment further includes a lens frame disposed inside the lens cover and attached to the side lens. With this arrangement, the lens frame has a partitioning portion covering the light entrance portion. In an arrangement where the light entrance portion extends toward the bulb whereas the side lens extends rearward from the light entrance portion, sometimes, light emission at the light entrance portion looks very different from light emission at a rear portion of the side lens. By covering the light entrance portion with the partitioning portion, it becomes possible to reduce the apparent non-uniformity in the light emission.

Further, preferably, the side lens becomes gradually narrower as a distance from the light entrance portion increases. In this case, the arrangement reduces a decrease in density of the light which is travelling through the side lens as the light approaches the rear end of the side lens.

The lighting equipment according to the present invention can be used suitably to a motorcycle.

In a motorcycle according to the present invention, preferably, the motorcycle includes a pair of the lighting equipment. In each of the lighting equipment, the bulb further has a base portion in which the light emitting portion is provided. The base portion and the light emitting portion are arranged in a forward travelling direction of the motorcycle. In this case, the pair of bulbs are disposed so that their orientation direction is the motorcycle's fore-aft direction. Therefore, unlike the case where the bulbs are disposed obliquely, the distance between the two bulbs is not narrowed. This makes it easy to ensure a space between the pair of lighting equipment.

It should be noted here that the terms "front" and "rear" used in the Claims indicate relative positional relationship in relevant members, and do not indicate front or rear with respect to the motorcycle.

For example, when the present invention is applied to lighting equipment disposed at a rear portion of a motorcycle, the front lens is provided "behind" the bulb in the overall view of the motorcycle. However, this represents the expression in the Claims that the front lens is provided "in front of" the bulb. Also, the side lens is formed to extend from the light entrance portion in a "forward" direction of the motorcycle. However, this represents the expression in the Claims that the side lens extends "rearward" from the light entrance portion.

The above-described object and other objects, characteristics, aspects and advantages of the present invention will become clearer from the following detailed description of embodiments according to the present invention with reference to the attached drawings.

### BRIEF DESCRIPTION OF THE DRAWINGS

Fig. 1 is a side view of a motorcycle according to an embodiment of the present invention.
Fig. 2 is an exploded perspective view showing a front cover and lighting equipment included in the motorcycle.
Fig. 3 (a) is a plan view of the lighting equipment whereas Fig. 3(b) is a plan view of the front cover.
Fig. 4 is a side view showing a region in the motorcycle where the lighting equipment is disposed.
Fig. 5 is a front view showing a region in the motorcycle where the lighting equipment is disposed.
Fig. 6 is an exploded perspective view of the lighting equipment.
Fig. 7 is side view of the lighting equipment.
Fig. 8 is a front view of the lighting equipment.
Fig. 9 is a perspective view of a housing included in the lighting equipment.
Fig. 10 is a sectional view taken in lines X-X in Fig. 8.
Fig. 11 is a sectional view taken in lines XI-XI in Fig. 8.
Fig. 12 is a sectional view taken in lines D-D in Fig. 7.

### LEGEND

- 10: Motorcycle
- 50: Lighting equipment
- 52, 54: Bulbs
- 52a, 54a: Base portions
- 52b, 54b: Light emitting portions
- 56: Housing
- 58, 60: Front lenses
- 62: Side lens
- 62a: Light entrance portion
- 62e: Lens cut
- 64: Lens frame
- 64d: Partitioning portion
- 66: Lens cover
- 66c: Curved surface
- 68, 70: Reflectors
- 68d: Cutout
- 72, 74a: Grooves
- C: Lateral center of motorcycle
- C1, C2: Bulb centerlines
- F: Forward direction of motorcycle
- R: Rearward direction of motorcycle
- Wo: Laterally outward direction of motorcycle
- Wi: Laterally inward direction of motorcycle

### BEST MODE FOR CARRYING OUT THE INVENTION

Hereinafter, embodiments of the present invention will be described with reference to the drawings.

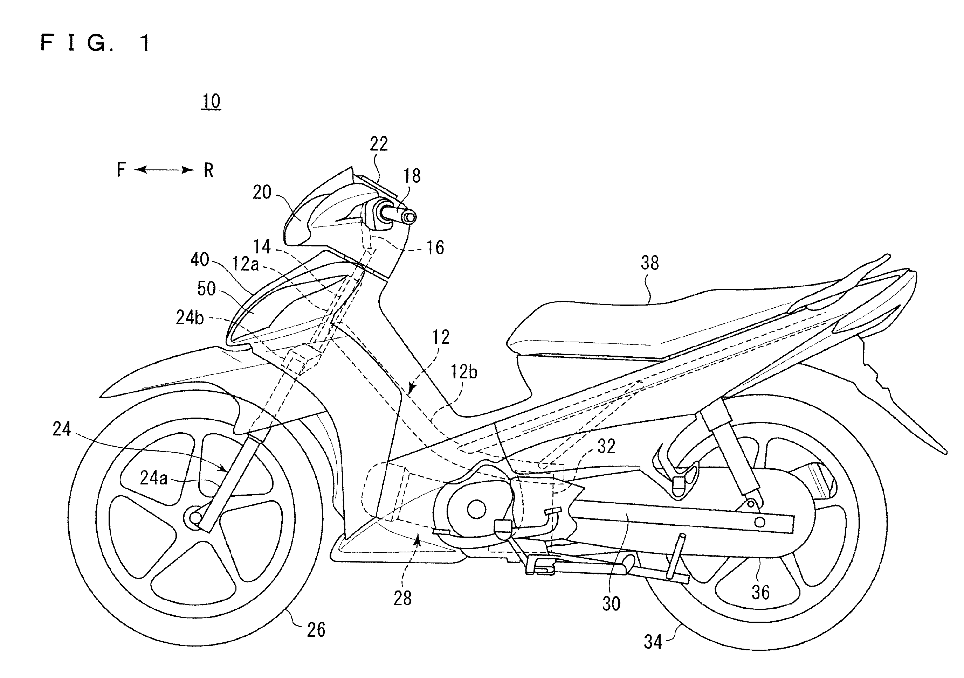

Fig. 1 is a side view of a motorcycle 10 according to an embodiment of the present invention.

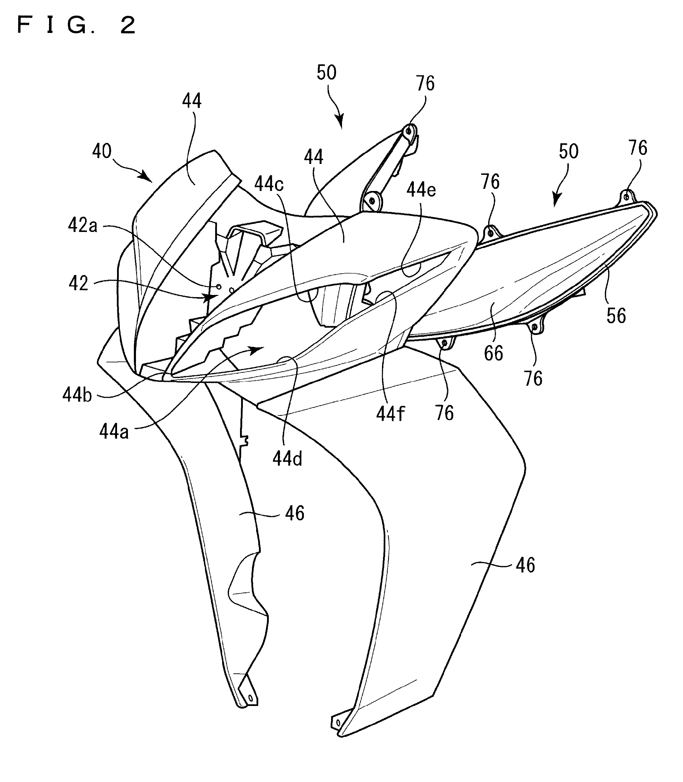

Fig. 2 is an exploded perspective view showing a front cover 40 and lighting equipment 50 included in the motorcycle 10.

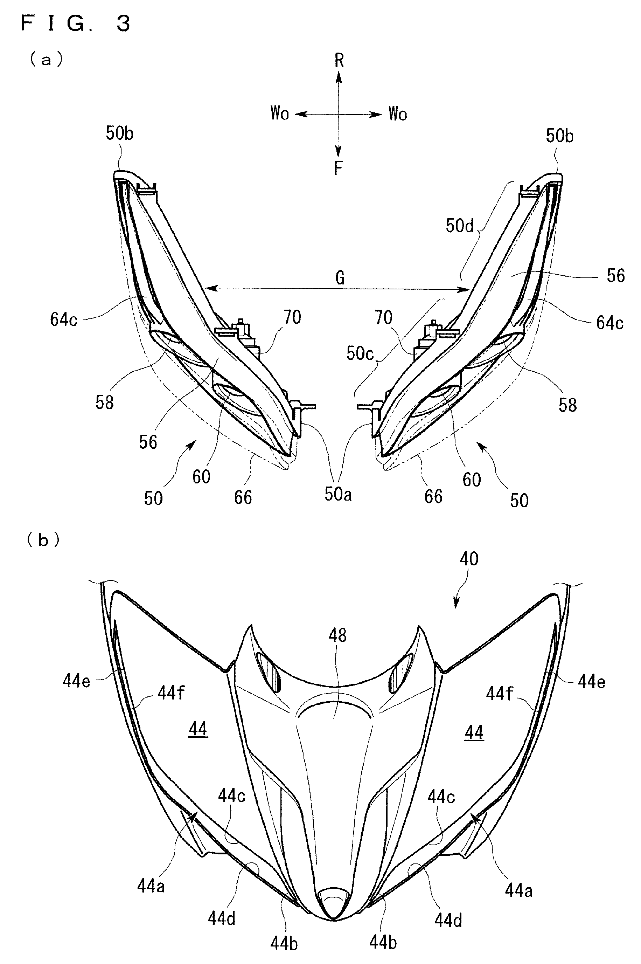

Fig. 3(a) is a plan view of the lighting equipment 50 whereas Fig. 3(b) is a plan view of the front cover 40.

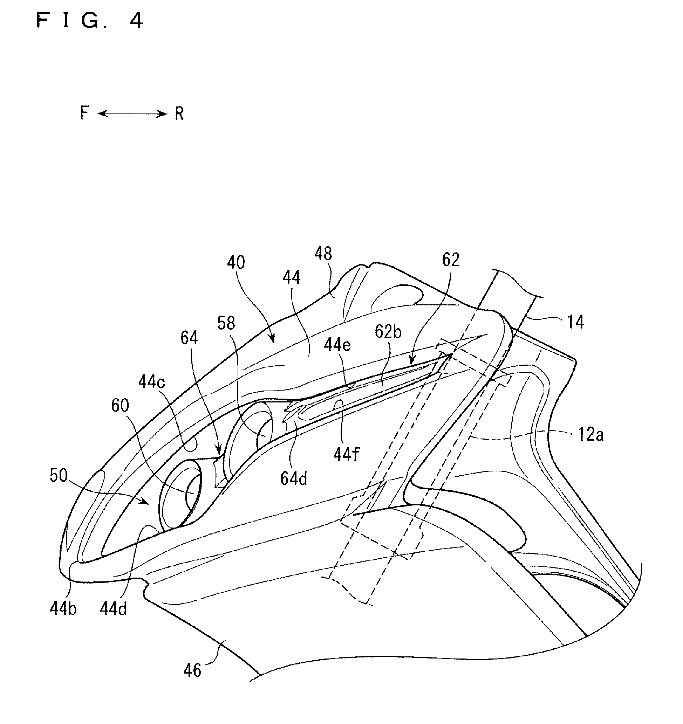

Fig. 4 is a side view of a region in the motorcycle 10 where the lighting equipment 50 is disposed.

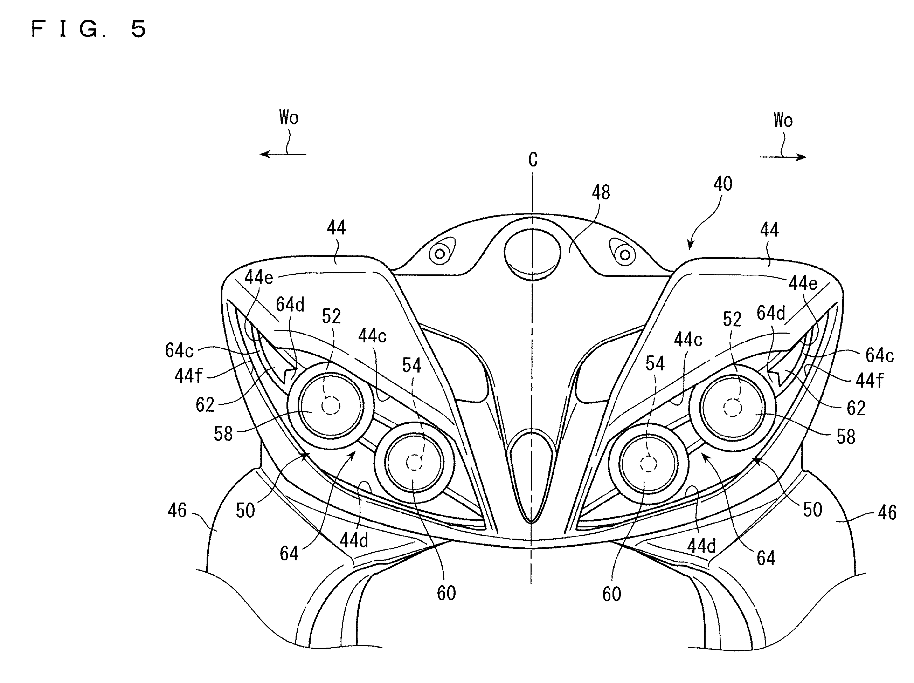

Fig. 5 is a front view of a region in the motorcycle 10 where the lighting equipment 50 is disposed.

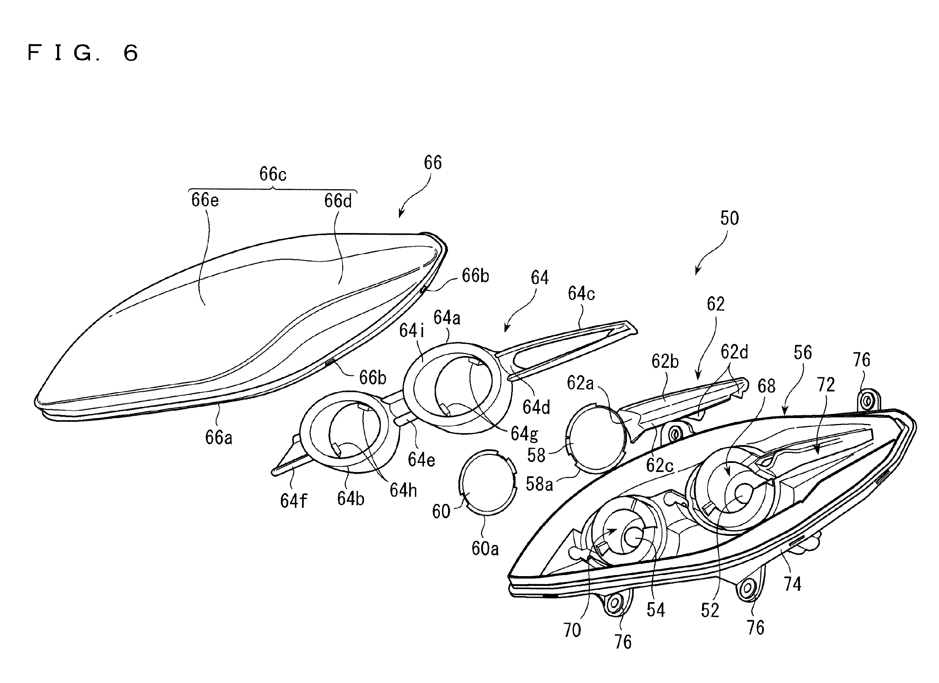

Fig. 6 is an exploded perspective view of the lighting equipment 50.

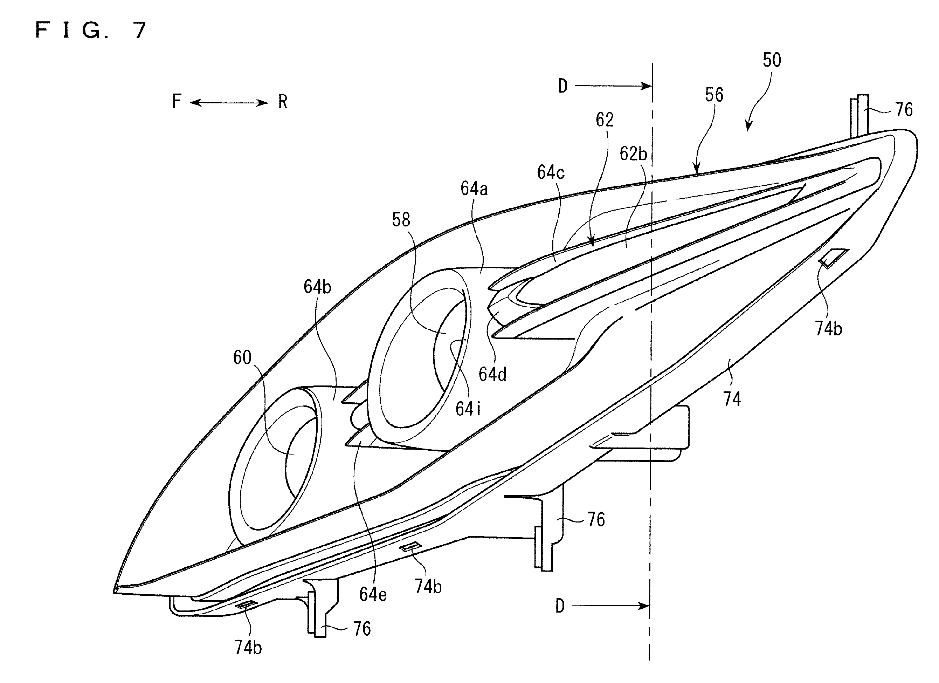

Fig. 7 is a side view of the lighting equipment 50.

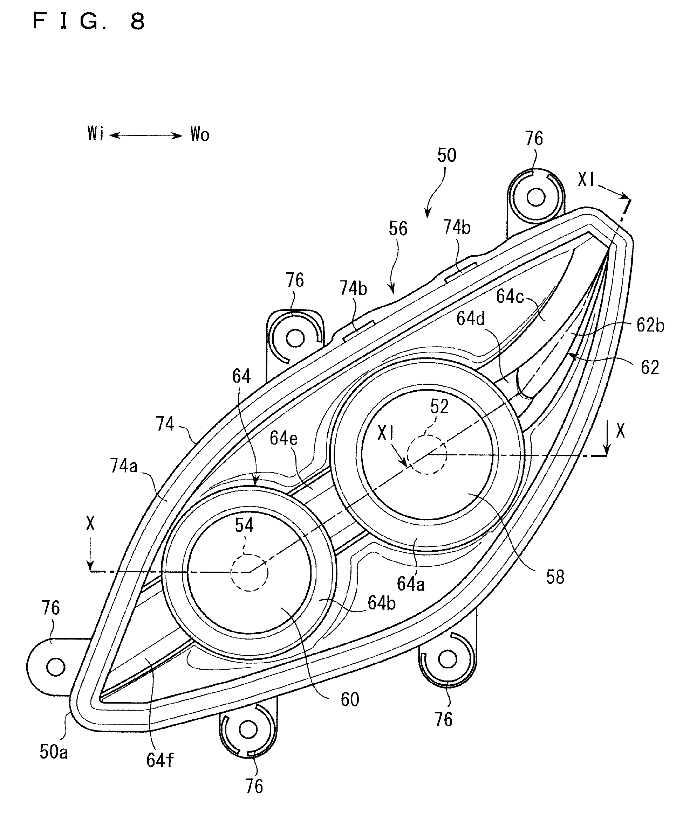

Fig. 8 is a front view of the lighting equipment 50.

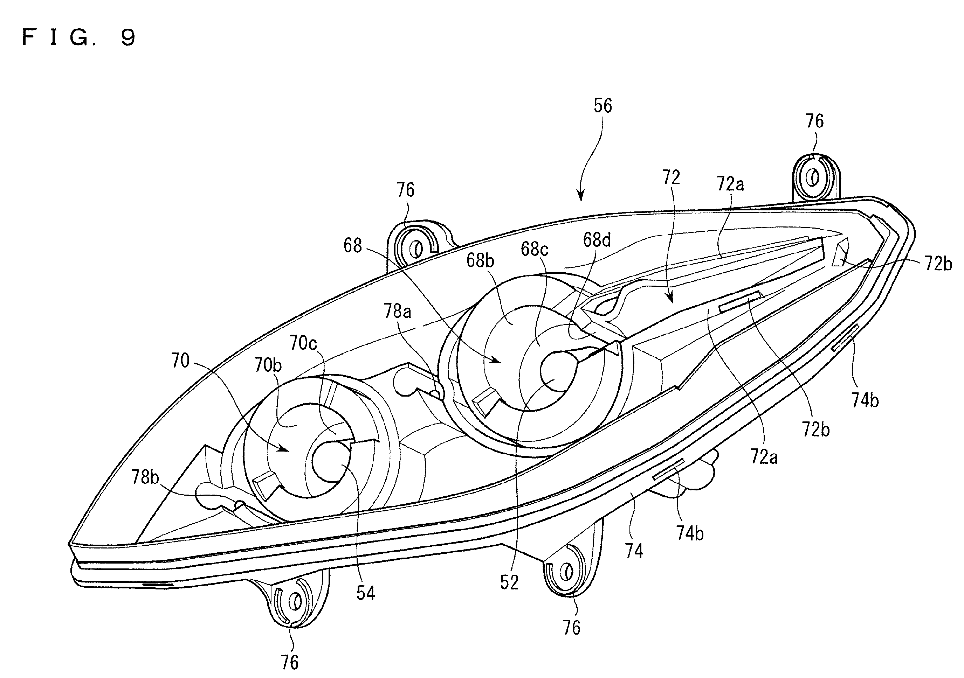

Fig. 9 is a perspective view of a housing 56 included in the lighting equipment 50.

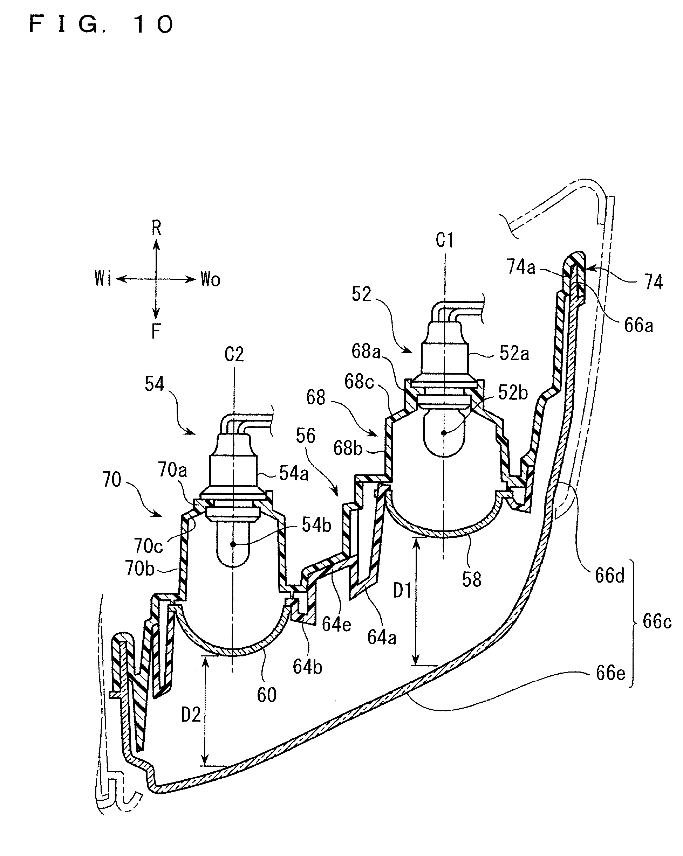

Fig. 10 is a sectional view taken in lines X-X in Fig. 8.

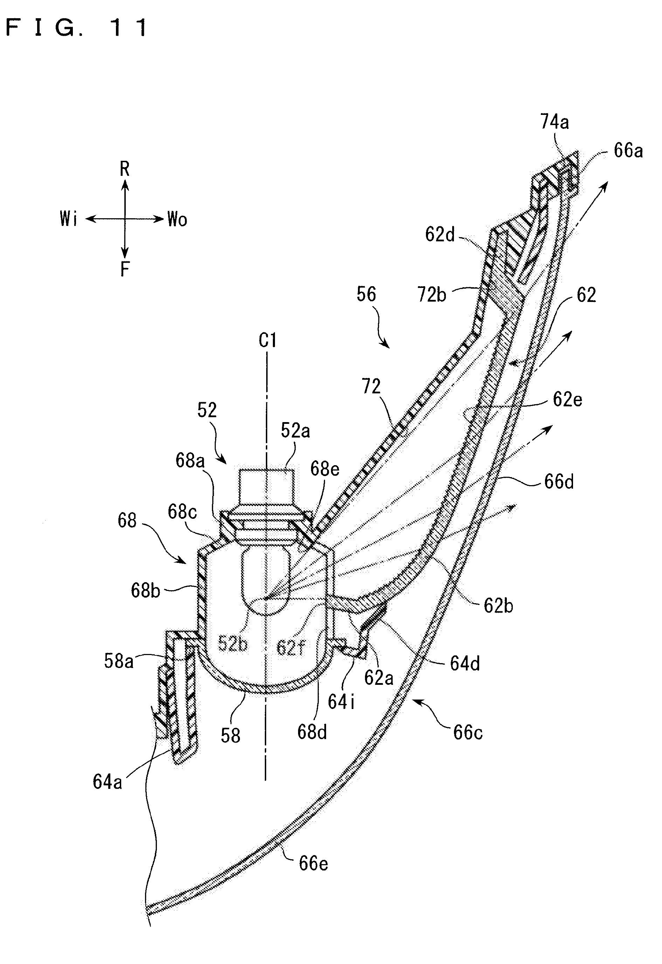

Fig. 11 is a sectional view taken in lines XI-XI in Fig. 8.

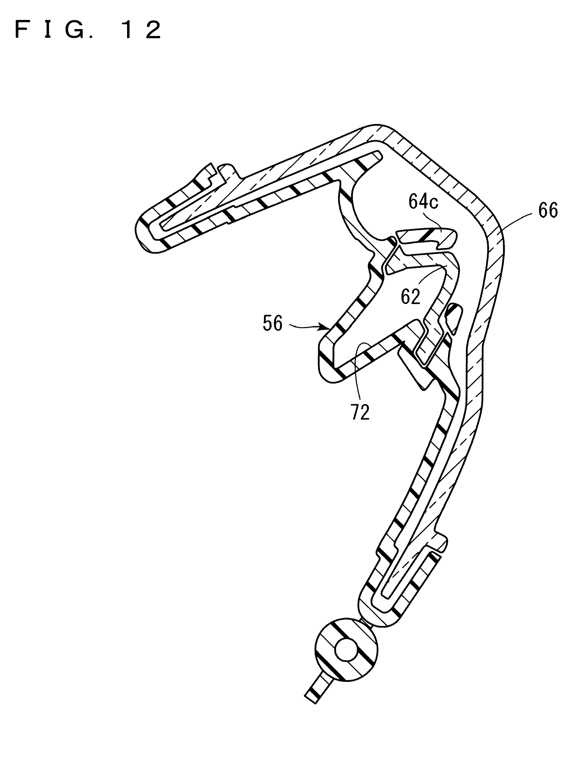

Fig. 12 is a sectional view taken in lines D-D in Fig. 7.

It should be noted here that Fig. 4, Fig. 5, Fig. 7 and Fig. 8 show states where a lens cover 66 included in the lighting equipment 50 is removed. It should also be noted here that in these figures, an alphabetical character "F" indicates a "forward" direction of the motorcycle; "R" indicates a rearward direction of the motorcycle; "Wo" indicates a laterally outward direction of the motorcycle; and "Wi" indicates a laterally inward direction of the motorcycle.

As shown in Fig. 1, the motorcycle 10 is of a so-called underbone type, and includes a motorcycle frame 12. The motorcycle frame 12 has a head pipe 12a provided at a front end thereof, and a main frame 12b extending from the head pipe 12a in an obliquely rearward and downward direction.

The head pipe 12a supports a steering shaft 14 which extends obliquely in an up-down direction. The steering shaft 14 has an upper end portion, where a handlebar 16 is fixed, and the handlebar 16 has two end portions each provided with a grip 18. A headlight 20 is disposed ahead of the handlebar 16. Above the handle bar 16, instruments 22 such as a speedometer are disposed.

A front fork 24 is disposed below the steering shaft 14. The front fork 24 has a pair of right and left suspensions 24a, and a bridge 24b which connects upper end portions of the suspensions 24a with each other. The steering shaft 14 has a lower end portion, which is fixed to the bridge 24b. The suspensions 24a have lower end portions, which rotatably support a front wheel 26. The handle bar 16, the front fork 24 and the front wheel 26 are pivotable integrally with each other around the steering shaft 14. Thus, the motorcycle 10 is steerable with the handlebar 16.

An engine 28 is disposed below a rear portion of the main frame 12b. The engine 28 is fixed to the main frame 12b. Behind the engine 28, a swing arm 30 extends in a fore-aft direction. The swing arm 30 has a front end portion, which is fastened to a bracket 32 provided at a rear end portion of the main frame 12b. A rear wheel 34 is supported by a rear end portion of the swing arm 30. Driving power from the engine 28 is transmitted to the rear wheel 34 via transmission members (not illustrated) such as a chain, belt or the like which are housed in a case 36. A seat 38 is disposed above the rear wheel 34.

The motorcycle 10 has, in its front region, a front cover 40 which covers a front portion of the motorcycle body from the front; and a pair of right and left lighting equipment 50 arranged on the right and the left sides, with a lateral center C of the motorcycle therebetween.

First, the front cover 40 will be described.

As shown in Fig. 2, the front cover 40 has a front center cover portion 42, a pair of front side-cover portions 44, and a pair of lower side-cover portions 46.

The front center cover portion 42 has mounting holes 42a, and is in front of the head pipe 12a. The front center cover portion 42 is supported by stays (not illustrated) extending ahead from the head pipe 12a. The stays are fixed to the front center cover portion 42 with bolts and screws (not illustrated) inserted through the mounting holes 42a.

The front side-cover portions 44 are formed to extend from the front center cover portion 42 in two laterally outward directions of the motorcycle (Wo directions in Fig. 5). Namely, the pair of front side-cover portions 44 are provided on the right and the left sides of the front center cover portion 42.

Each front side-cover portion 44 has an opening 44a so that the lighting equipment 50 can be seen from the front. As shown in Fig. 2, an edge of the opening 44a has center-side edge portions 44c, 44d extending from a laterally-center-side end portion 44b in a laterally outward and obliquely rearward direction of the motorcycle; and outer-side edge portions 44e, 44f curving from the center-side edge portions 44c, 44d and extending rearward. A distance between the outer-side edge portions 44e, 44f is smaller than a distance between the center-side edge portions 44c, 44d. The outer-side edge portions 44e, 44f extend rearward along a translucent portion 62b of a side lens 62.

As shown in Fig. 3(b), when the front cover 40 is viewed from above, each opening 44a of the front cover 40 has its edge which extends from a laterally center-side end portion 44b in a laterally outward and obliquely rearward direction of the motorcycle, and then curves rearward. Also, referring to Fig. 3(a) and Fig. 3(b), the edge of the opening 44a is formed to follow a front surface of a lens cover 66. In other words, the edge of the opening 44a is formed to surround the lens cover 66 at a predetermined distance to the front surface of the lens cover 66. As shown in Fig. 5, the opening 44a formed as described above makes the front lenses 58, 60 visible from the front between the center-side edge portions 44c, 44d, and as shown in Fig. 4, makes the side lens 62 visible between the outer-side edge portions 44e, 44f. The front side-cover portion 44 has its inner surface formed with a plurality of mounts along the edge of the opening 44a.

Returning to Fig. 2, the right and left pair of lower side-cover portions 46 extend downward from the right and left pair of front side-cover portions 44. The lower side-cover portions 46 are disposed to cover the motorcycle body from laterally outward directions of the motorcycle.

As shown in Fig. 3(b), Fig. 4 and Fig. 5, a center cover 48 is provided ahead of the front center cover portion 42 for covering the front center cover portion 42 from the front.

Next, the lighting equipment 50 will be described.

Referring to Fig. 2 and Fig. 3(a), the pair of right and left lighting equipment 50 extend from their respective laterally-center-side end portions 50a, in obliquely rearward and laterally outward directions of the motorcycle when viewed from above. Therefore, a distance G between the pair of lighting equipment 50 increases as it is measured at a more rearward position. Between the pair of lighting equipment 50, there is provided, as shown in Fig. 4 for example, a head pipe 12a and a steering shaft 14 which is inserted through the head pipe 12a. In the present embodiment, the head pipe 12a and the steering shaft 14 are located between rear end portions 50b of the pair of lighting equipment 50 (see Fig. 3). The above-mentioned stays which extend forward from the head pipe 12a and supports the front cover 40; the instruments 22 which are provided above the handlebar 16; and stays (not illustrated) which support a wire harness connected to the head light 20 are also disposed between the pair of lighting equipment 50.

Referring to Fig. 6, each piece of the lighting equipment 50 has bulbs 52, 54; a housing 56; front lenses 58, 60; a side lens 62; a lens frame 64; and a lens cover 66. In other words, the motorcycle 10 has a pair of bulbs 52, a pair of bulbs 54, a pair of housings 56, a pair of front lenses 58, a pair of front lenses 60, a pair of side lenses 62, a pair of lens frames 64 and a pair of lens covers 66.

As shown in Fig. 5, the two bulbs 52, 54 included in each piece of the lighting equipment 50 are disposed laterally of each other in a width direction of the motorcycle. In the present embodiment, the bulb 52 is at a slightly higher position than the bulb 54. Also, the bulb 54 which is on a laterally center side of the motorcycle is at a more forward (Direction F) position of the motorcycle than the bulb 52 (see Fig. 10). The bulb 52 disposed on the laterally outward side of the motorcycle is, for example, a flasher bulb for indicating the direction in which the motorcycle 10 is turning. The bulb 54 disposed on the laterally center side of the motorcycle is, for example, a position bulb for indicating a position of the motorcycle 10.

As shown in Fig. 10, the bulbs 52, 54 respectively have base portions 52a, 54a; and light emitting portions 52b, 54b provided in front of the base portions 52a, 54a for emission of light. The light emitting portions 52b, 54b include filaments or LEDs for example.

The bulbs 52, 54 are disposed so that a direction in which the light emitting portions 52b, 54b are oriented from their respective base portions 52a, 54a (hereinafter called orientation direction) is the motorcycle's fore-aft direction (F-R direction). Specifically, the bulbs 52, 54 are disposed so that their centerlines C1, C2 lay along the fore-aft direction of the motorcycle. In the present embodiment, the orientation direction is the forward direction of the motorcycle. In other words, the base portion 52a and the light emitting portion 52b are arranged in the forward travelling direction of the motorcycle 10. Likewise, the base portion 54a and the light emitting portion 54b are arranged in the forward travelling direction of the motorcycle 10. It should be noted here that the bulbs 52, 54 included in one of the pieces of lighting equipment 50 are on the right-hand side whereas the bulbs 52, 54 included in the other piece of lighting equipment 50 are on the left-hand side, across the lateral center C of the motorcycle (see Fig. 5). Also, in each piece of the lighting equipment 50, the bulbs 52, 54 have their respective centerlines C1, C2 laid in parallel to each other.

The housing 56 is a single-piece member formed of a resin, and holds the bulbs 52, 54.

As shown in Fig. 9, the housing 56 includes reflectors 68, 70, a groove 72 and an outer frame portion 74. In other words, since the motorcycle 10 has a pair of housings 56 (see Fig. 3(a)), the motorcycle 10 includes a pair of reflectors 68, a pair of reflectors 70, a pair of grooves 72 and a pair of outer frame portions 74.

Referring to Fig. 10, the reflectors 68, 70 are open in the orientation direction of the bulbs 52, 54, and each has a bowl-like shape opening in the motorcycle's forward direction. The bulbs 52, 54 are supported by the reflectors 68, 70 respectively. More specifically, the reflectors 68, 70 include bulb supporting portions 68a, 70a and reflection surface portions 68b, 70b respectively. The bulb supporting portions 68a, 70a are at respective rear end portions of the reflectors 68, 70, are annular, and support the base portions 52a, 54a of the bulbs 52, 54. In the present embodiment, the bulb supporting portions 68a, 70a have their inner circumferential surfaces formed with annular projections for catching outer circumferential surfaces of the base portions 52a, 54a. The reflection surface portions 68b, 70b are cylindrical, extend forward from the bulb supporting portions 68a, 70a respectively and open in the forward direction of the motorcycle. The reflection surface portions 68b, 70b extend in the forward direction beyond their respective light emitting portions 52b, 54b. The reflection surface portions 68b, 70b are formed so that their centerlines are identical with the centerlines C1, C2 of the respective bulbs 52, 54. The reflection surface portions 68b, 70b have annular bottom portions 68c, 70c extending radially outward from their respective bulb supporting portions 68a, 70a, and extend further forward from the bottom portions 68c, 70c. The reflection surface portions 68b, 70b have front edges connecting to a back surface of the housing 56. In other words, the reflectors 68, 70 extend from the back surface of the housing 56 in a rearward direction of the motorcycle.

The light emitting portions 52b, 54b are inside the reflection surface portions 68b, 70b. With this, the entire inner surfaces of the reflection surface portions 68b, 70b including the front surfaces of the bottom portions 68c, 70c serve as reflection surfaces for light from the light emitting portions 52b, 54b to be reflected in the forward direction of the motorcycle.

Also, as shown in Fig. 9 and Fig. 11, the reflector 68 has a cutout 68d formed in the reflection surface portion 68b. It is preferable that the cutout 68d has a width not greater than generally a fourth of an overall circumferential length of the reflector 68. With respect to the light emitting portion 52b of the bulb 52 the cutout 68d is on a laterally outward side (Direction Wo) of the motorcycle. Therefore, part of the light emitted from the light emitting portion 52b of the bulb 52, namely light emitted in a laterally outward direction of the motorcycle, passes through the cutout 68d and travels in a laterally outward direction of the motorcycle. Especially in the present embodiment, the cutout 68d is formed to allow part of light from the bulb 52 to travel from the bulb 52 in an obliquely rearward direction. More specifically, an edge bottom portion 68e is the deepest portion in the edge of the cutout 68d, i.e. the portion closest to the base portion 52a of the bulb 52, and this portion reaches as far as the bulb supporting portion 68a. Therefore, the light emitted from the light emitting portion 52b of the bulb 52 in a laterally outward and obliquely rearward direction of the motorcycle passes through the cutout 68d and travels obliquely rearward without being reflected by the inner surface of the reflection surface portion 68c. It should be noted here that the cutout 68d should extend at least to a more rearward position of the motorcycle than the front end of the light emitting portions 52b.

Referring to Fig. 9, the groove 72 extends from an edge of the cutout 68d in a laterally outward and obliquely rearward direction of the motorcycle. In other words, the groove 72 extends from the cutout 68d in parallel with the side lens 62. The groove 72 has substantially the same width as of the side lens 62 (see Fig. 6 and Fig. 12). Light emitted from the light emitting portion 52b travels through the groove 72 in a laterally outward and obliquely rearward direction of the motorcycle. A plurality of holes 72b are formed on an edge 72a of the groove 72 in the housing 56.

In the present embodiment, an inner surface of the groove 72 has a color which reduces reflection of light. For example, the housing 56 is formed of a resin which has a color that does not reflect light, and the resin material is exposed on the inner surface of the groove 72. As another example, the inner surface of the groove 72 has a coating which reduces light reflection. Such an arrangement as described above reduces a case where light from outside comes through the side lens 62, hits the inner surface of the groove 72, is reflected by the inner surface, and then emitted from the side lens 62 to the outside. As a result, the arrangement reduces light emission from the side lens 62 when the bulb 52 is not turned on, making it easy to tell whether the bulb 52 is turned on or off.

The outer frame portion 74 surrounds the reflectors 68, 70 and the groove 72. Referring to Fig. 8, Fig. 9 and Fig. 10, the outer frame portion 74 has a groove 74a extending along an outer circumference of the housing 56; and a plurality of mounting holes 74b spaced from each other at a distance. Also, as shown in Fig. 2 and Fig. 9, a plurality of mounting portions 76 are formed on an outer circumferential edge of the outer frame portion 74. Also, the housing 56 has a plurality of mounting holes 78a, 78b. The mounting hole 78a is between the reflectors 68, 70. The mounting hole 78b is on a more center side in a lateral direction of the motorcycle than the reflector 70. Each mounting portion 76 of the housing 56 is fastened to a mounting portion in the front side-cover portion 44 from behind, using a bolt, screw or the like.

Referring to Fig. 8 and Fig. 10, the front lenses 58, 60 are in front of the bulbs 52, 54 respectively. The front lenses 58, 60 are disc-like, with their respective center portions convexed forward, and are disposed to cover the light emitting portions 52b, 54b of the bulbs 52, 54 from the front. In the present embodiment, the front lenses 58, 60 do not have lens cuts for light distribution purpose in their inner surfaces, so they have smooth surfaces. Light which is reflected forward by the reflection surface portions 68b, 70b of the reflectors 68, 70 is emitted through the front lenses 58, 60 in a forward direction of the motorcycle.

The side lens 62 is formed separately from the front lens 58.

Referring to Fig. 11, the side lens 62 is provided laterally of the bulb 52. The side lens 62 is on a laterally outward side of the motorcycle with respect to the bulb 52. The side lens 62 is disposed so that its outer surface is oriented in a laterally outward direction of the motorcycle. The side lens 62 is an oblong lens extending to a more rearward position than the position of the light emitting portion 52b. In other words, the side lens 62 has its rear portion located at a more rearward position than the light emitting portion 52b of the bulb 52. In the present embodiment, the side lens 62 has its front end located on a laterally outward side, with respect to the motorcycle, of the light emitting portion 52b. With this positioning, the side lens 62 extends from its front end in an obliquely rearward direction, so that the side lens 62 has its rear end located at a more rearward position of the motorcycle than the rear end of the base portion 52a of the bulb 52. Therefore, the light emitted from the light emitting portion 52b of the bulb 52 in a laterally outward direction of the motorcycle enters the side lens 62, passes through the side lens 62 and reaches the rear end of the side lens 62. Also, light emitted from the light emitting portion 52b in an obliquely rearward direction passes through the side lens 62.

Specifically, as shown in Fig. 6 and Fig. 11, the side lens 62 has a light entrance portion 62a; a translucent portion 62b; a flange portion 62c; a plurality (two in the present embodiment) of projections 62d; and a lens cut 62e.

The light entrance portion 62a is at a front end of the side lens 62, and extends toward the bulb 52 from a laterally outward direction of the motorcycle. The light entrance portion 62a has an end surface 62f which is located on a laterally outward side of the motorcycle with respect to the light emitting portion 52b, and is oriented to the light emitting portion 52b. The translucent portion 62b is on an inner side of a side frame portion 64c, bulging from the light entrance portion 62a toward a laterally outward side of the motorcycle and then extending rearward. The flange portion 62c is formed on a circumferential edge of the translucent portion 62b. The projections 62d project out of an edge of the translucent portion 62b and an edge of the flange portion 62c respectively. The lens cut 62e is formed on an inner surface of the translucent portion 62b.

Light emitted from the light emitting portion 52b in a laterally outward direction of the motorcycle enters the side lens 62 from the end surface 62f. Then, the light travels toward the rear end of the side lens 62 while being reflected repeatedly within the side lens 62. In the process of travelling through the side lens 62, part of the light which has reached the outer surface of the side lens 62 passes through the outer surface, thus being emitted to the outside. The other part of the light is reflected by the outer surface and then travels further toward the rear end of the side lens 62. Therefore, the arrangement makes it possible to increase an amount of light which is emitted to the outside from a portion in the side lens 62 located far away from the bulb 52, i.e., from a portion near the rear end of the side lens 62. Especially in the present embodiment, as shown in Fig. 6 and Fig. 7, the side lens 62 becomes gradually narrower as it is farther away from the light entrance portion 62a. This reduces a density decrease in the light which is travelling through the side lens 62 as the light approaches the rear end of the side lens 62.

Also, the lens cut 62e reduces forward delivery of the light after the light has entered the side lens 62. Specifically, as light enters the side lens 62, the lens cut 62e refracts the light in a rearward direction of the motorcycle. The arrangement increases ease of visual recognition of the light emitted from the side lens 62 when the motorcycle 10 is seen from a side or when the motorcycle 10 is seen from an obliquely rearward position. On the other hand, when the motorcycle 10 is seen from the front, the arrangement reduces visual recognition of the side lens 62, providing relative enhancement of the front lens 58 in visual recognition.

As described earlier, the housing 56 is provided with two bulbs 52, 54 arranged in the width direction of the motorcycle, and a side lens 62 placed laterally outward of the bulb 52 and extending rearward. As shown in Fig. 3 (a), in a plan view, the housing 56 extends from a laterally-center-side end portion (the end portion of the lighting equipment 50, located on a laterally center side of the motorcycle) 50a in a laterally outward and obliquely rearward direction of the motorcycle, then curves rearward and extends further. Specifically, the housing 56 has a center-side portion 50c extending from the end portion 50a in a laterally outward and obliquely rearward direction of the motorcycle, and an outer-side portion 50d curving rearward and extending further from the center-side portion 50c. With this, the above-described reflectors 68, 70 are formed in the center-side portion 50c while the groove 72 is formed in the outer-side portion 50d.

Referring to Fig. 6 and Fig. 12, the lens frame 64 is disposed inside the lens cover 66, and attached to the front lenses 58, 60 and the side lens 62. The lens frame 64 has front frame portions 64a, 64b; a side frame portion 64c; a partitioning portion 64d; a connecting portion 64e; the protruding portion 64f; a plurality of pawl portions 64g; and a plurality of pawl portions 64h.

Referring also to Fig. 10, the front frame portions 64a, 64b are arranged in the width direction of the motorcycle. The front frame portions 64a, 64b are annular, surrounding the front lenses 58, 60 respectively. In the present embodiment, the front frame portions 64a, 64b are cylindrical, being formed to extend forward from outer circumferential edges of the respective front lenses 58, 60.

As shown in Fig. 6 and Fig. 7, the side frame portion 64c extends in a laterally outward and rearward direction of the motorcycle from the front frame portion 64a which surrounds the front lens 58. The side frame portion 64c surrounds the side lens 62. The side frame portion 64c is on the flange portion 62c, surrounding the translucent portion 62b. Therefore, the light emitted from the light emitting portion 52b of the bulb 52 in an obliquely rearward direction passes through the translucent portion 62b and then goes to the outside.

Referring to Fig. 7, the partitioning portion 64d is formed at a base portion (adjacent to the front frame portion 64a) of the side frame portion 64c. The partitioning portion 64d extends from an outer circumferential surface of the front frame portion 64a toward an outer surface of the translucent portion 62b. As shown in Fig. 11, the partitioning portion 64d is provided like a connection between the front lens 58 and the side lens 62. In other words, the partitioning portion 64d is between the front lens 58 and the side lens 62. Specifically, the light entrance portion 62a at a front end of the side lens 62 is positioned at a rearward location at a distance from a flange portion 58a which is formed in an outer circumferential edge of the front lens 58. The partitioning portion 64d is between the flange portion 58a and the translucent portion 62b.

Also, as shown in Fig. 11, the partitioning portion 64d covers the light entrance portion 62a from a laterally outward side of the motorcycle. Further, the partitioning portion 64d covers, together with the side frame portion 64c, a gap between the flange portion 58a and the light entrance portion 62a from a laterally outward side of the motorcycle. As shown in Fig. 11, with respect to the light emitting portion 52b, the partitioning portion 64d is on a laterally outward side of the motorcycle whereas the front frame portion 64a has its front edge 64i located at a more forward position than the light emitting portion 52b. Therefore, when the motorcycle 10 is seen from a side, light which is reflected forward by the reflection surface portion 68b to pass through the front lens 58 is not perceived easily whereas light which passes through the translucent portion 62b of the side lens 62 looks relatively more outstanding.

Referring to Fig. 6, the connecting portion 64e connects the right and the left front frame portions 64a, 64b with each other. The protruding portion 64f protrudes from an outer circumferential surface of the front frame portion 64b. The connecting portion 64e and the protruding portion 64f have their back surfaces formed with mounting holes. The lens frame 64 is fixed to the housing 56 with a screw or the like which is inserted from behind the housing 56 through the mounting hole 78a and then into the mounting hole of the connecting portion 64e, and with a screw or the like which is inserted from behind through the mounting hole 78b and then into the mounting hole of the protruding portion 64f.

As shown in Fig. 6, the front frame portions 64a, 64b have their rear edges formed with a plurality of pawl portions 64g, 64h respectively. These pawl portions 64g, 64h hold the edges of the front lenses 58, 60. Thus, the lens frame 64 holds the front lenses 58, 60. Also, as the projections 62d are fitted into their corresponding holes 72b, the side lens 62 is fitted to the housing 56 to cover the groove 72 (see Fig. 12).

Then, as the lens frame 64 is fixed to the housing 56, the front lenses 58, 60 are held at their respective positions in front of the bulbs 52, 54. It should be noted here that the flange portions 58a, 60a formed on the outer circumferential edges of the front lenses 58, 60 are caught between respective pairs made by the front edges of the reflectors 68, 70 and the front frame portions 64a, 64b. Also, as the lens frame 64 is fixed to the housing 56 as described, the side lens 62 is caught between the side frame portion 64c and the housing 56. Specifically, the flange portion 62c is caught between the side frame portion 64c and the edge 72a of the groove 72 in the housing 56. Thus, the side lens 62 is held on a laterally outward side of the motorcycle with respect to the bulb 52.

Referring to Fig. 3(a), the lens cover 66 is in front of the lighting equipment 50, and is translucent. The lens cover 66 provides part of the outer shape of the motorcycle 10 when mounted on the motorcycle 10. The lens cover 66 covers the front lenses 58, 60 and the side lens 62. In the present embodiment, as shown in Fig. 6, the lens cover 66 is formed in a shape of an oblong bowl correspondingly to the shape of the housing 56. The lens cover 66 has an edge 66a formed to follow an outer circumferential edge of the housing 56. The lens cover 66 covers the entire housing 56 from the front.

As shown in Fig. 10, the edge 66a of the lens cover 66 is fitted into the groove 74a of the housing 56. Also, as shown in Fig. 6, the edge 66a of the lens cover 66 is formed with pawl portions 66b. As the edge 66a is fitted into the groove 74a, the pawl portions 66b catch their respective mounting holes 74b. Thus, the lens cover 66 is fixed to the outer frame portion 74 of the housing 56.

Referring to Fig. 6, Fig. 10 and Fig. 11, the lens cover 66 has a curved surface 66c extending forward along the side lens 62 and curving to reach a region ahead of the front lenses 58, 60. The curved surface 66c has a rear portion 66d extending forward substantially in parallel to the side lens 62; and a front portion 66e curving gently from the rear portion 66d toward a laterally center side of the motorcycle to reach a region ahead of the front lenses 58, 60. In other words, the lens cover 66 has a shape which follows the housing 56; and as shown in Fig. 3(a), when the lens cover 66 is viewed in a plan view, the front surface of the lens cover 66 starts from a laterally-center-side end portion 50a, extends in a laterally outward and obliquely rearward direction of the motorcycle, then curves rearward, and extends further.

Referring to Fig. 10 and Fig. 11, distances D1, D2 from the respective front lenses 58, 60 to the front portion 66e are greater than a gap between the side lens 62 and the rear portion 66d. Thus, air can flow smoothly along the surface of lens cover 66 toward the rear when the motorcycle 10 is running. Especially in the present embodiment, the front lens 60 is located at a more forward position than the front lens 58, and the front portion 66e of the curved surface 66c is slanted to follow the lens layout. As a result, a smoother air flow can be formed on the surface of the lens cover 66.

According to the motorcycle 10, the side lens 62 is provided between the lens cover 66, which is an outer-shape part of the motorcycle 10, and the light emitting portion 52b. In other words, the side lens 62 is disposed on an inner side of the lens cover 66. This means that the side lens 62 is closer to the light emitting portion 52b than is the lens cover 66. For this reason, it is possible to increase the amount of light which is supplied directly from the light emitting portion 52 to the side lens 62 even if the cutout 68d, which is provided for introducing light into the side lens 62, is not given an increased area of opening. Also, since it is not necessary to increase the cutout 68d, there is no large decrease in the amount of light which is reflected by the reflector 68, namely the amount of light supplied in the forward direction. Further, it is possible to design the lens cover 66, which is an outer-shape part of the motorcycle 10, without depending upon the shape of the bulbs 52, 54 or of the side lens 62, which means that the present invention improves design freedom of the outer shape of the motorcycle 10.

When the partitioning portion 64d is provided like a connection between the front lens 58 and the side lens 62, i.e., when the partitioning portion 64d is provided between the front lens 58 and the side lens 62, brightness of the side lens 62 is perceived on the bases of relative brightness between the partitioning portion 64d and the side lens 62, so the side lens 62 looks bright. This leads to a clear contrast between the partitioning portion 64d and the side lens 62, resulting in improved visual recognition of the side lens 62. Also, the arrangement makes it possible to emit light from two positions which are partitioned from each other, with a small number of parts, i.e., with only one bulb 52.

The lens cover 66 has a curved surface 66c. This makes it possible to reduce air resistance on the surface of the lighting equipment 50 and thereby to form a smooth air flow on the surface of the lighting equipment 50.

The housing 56 has a groove 72, whereby light from the light emitting portion 52b is introduced efficiently to the side lens 62 via the cutout 68d and the groove 72 while reducing a halo around the side lens 62.

The side lens 62 has a lens cut 62e. This makes it possible to reduce light thrown in the forward direction, thereby relatively increasing light thrown in the lateral direction (more specifically in a laterally outward direction of the motorcycle). Therefore, it is possible to improve visual recognition of the lighting equipment 50 when the motorcycle 10 is seen from a side.

The front lens 58 and the side lens 62 are made as separate members. The arrangement makes it possible to increase freedom in the shape of the lens cut 62e of the side lens 62 in comparison to cases where the front lens 58 and the side lens 62 are formed as a single, integrated member.

The side lens 62 is formed to extend rearward from the light entrance portion 62a. Thus, light from the bulb 52 which enters the light entrance portion 62a travels through the side lens 62 toward the rear end thereof. The arrangement makes it possible to emit light from a wide range of the side lens 62, and thus to improve visual recognition of the lighting equipment 50 further when the motorcycle 10 is viewed from a side.

In the arrangement where the light entrance portion 62a extends toward the bulb 52 from a laterally outward side of the motorcycle whereas the side lens 62 extends rearward from the light entrance portion 62a, sometimes, light emission at the light entrance portion 62a looks very different from light emission at a rear portion of the side lens 62. However, it is possible to reduce the apparent non-uniformity in the light emission by covering the light entrance portion 62a with the partitioning portion 64d.

The side lens 62 becomes gradually narrower as it is farther away from the light entrance portion 62a. This reduces a decrease in density of the light which is travelling through the side lens 62 as it approaches the rear end of the side lens 62.

The pair of bulbs 52 are disposed so that their orientation direction is the motorcycle's fore-aft direction. Therefore, unlike the case where the bulbs are disposed obliquely, the distance between the two bulbs 52 is not narrowed. This makes it easy to ensure a space between the pair of right and left pieces of lighting equipment 50.

It should be noted here that the present invention is not limited to the motorcycle 10 according to the embodiment described above, but may be varied in many ways. For example, in the embodiment described above, two bulbs 52, 54 are provided in one piece of lighting equipment 50. However, the bulb 54 located on the laterally center side of the motorcycle need not necessarily be provided.

In the embodiment described above, the front lens 58 and the side lens 62 are separate members from each other. However, the front lens 58 and the side lens 62 may be formed as a single, integrated member.

Position of the end surface 62f of the light entrance portion 62a is not limited to be within the cutout 68d, but may be on an inner side of the reflector 68 (at a position closer to the light emitting portion 52b than the cutout 68d), or on an outer side of the reflector 68.

In the above embodiment, description was made for a case where the present invention is applied to the lighting equipment 50 which is disposed in the front portion of the motorcycle body. However, the present invention may be applied to a taillight. In this case, the arrangement may be as follows: A taillight bulb is oriented so that a direction in which the bulb's light emitting portion is with respect to its base portion is the motorcycle's fore-aft direction. Then, a front lens is disposed in front of the bulb (behind if described in terms of provided on a laterally outward side from the bulb, in terms of the motorcycle's width direction. The side lens is formed to extend rearward (forward if described in terms of motorcycle's fore-aft direction) from the light entrance portion. The reflector has a cutout to allow part of light from the bulb to travel toward the side lens. The lens cover extends along the side lens and to a front region (rear region if described in terms of motorcycle's fore-aft direction) of the front lens.

The motorcycle according to the present invention is not limited to those of underbone types, but may be of any other types, such as moped types, scooter types and sports types. Also, the motorcycle according to the present invention may be an electric motorcycle.

The present invention being thus far described in terms of preferred embodiments, it is obvious that these may be varied in many ways within the scope of the accompanied claims.

## Claims

1. Lighting equipment for a motorcycle, comprising:
a bulb (52) having a base portion (52a) and a light emitting portion (52b) provided in front of the base portion (52a); and
a side lens (62) provided laterally of the bulb (52)
a reflector (68) having a bulb supporting portion (68a) supporting the base portion (52a), a reflection surface portion (68b) extending forward from the bulb supporting portion (68a),
an annular bottom portion (68c) extending radially outward from the bulb supporting portion (68a) and a cutout (68d) formed in the reflection surface portion (68b); for supplying part of light from the light emitting portion (52b) to the side lens (62) while holding the bulb,
a lens cover (66) covering the side lens while constituting part of an outer shape of the motorcycle,
**characterized in that** the bulb (52) is disposed so that a direction in which the light emitting portion (52b) is oriented from the base portion (52a) is the motorcycle's fore-aft direction;
the cutout (68d) reaches as far as the bulb supporting portion (68a) and allows part of light from the bulb (52) to travel from the bulb (52) in an obliquely rearward direction.

2. The lighting equipment according to Claim 1, further comprising:
a front lens (58) provided in front of the bulb (52) and covered by the lens cover (66);
a lens frame (64) disposed inside the lens cover (66); and
a housing (56) having a groove (72) extending from the cutout (68d) so that light emitted from the light emitting portion (52b) is introduced to the groove (72) via the cutout (68d)
wherein
the lens frame (64) has a partitioning portion (64d) provided between the front lens(58) and the side lens (62).

3. The lighting equipment according to Claim 2, wherein the lens cover (66) has a curved surface.

4. The lighting equipment according to Claim 2, wherein the groove (72) has a surface coated with a color for reducing reflection of light.

5. The lighting equipment according to Claim 1,
wherein the side lens (62) has a lens cut for reducing forward delivery of light after the light from the bulb (52) has entered the side lens (62).

6. The lighting equipment according to Claim 5, further comprising a front lens (58) provided in front of the bulb (52) and covered by the lens cover (66), wherein
the front lens (58) and the side lens (62) are separate members from each other.

7. The lighting equipment according to Claim 5, wherein the side lens (62) has a light entrance portion (62a) extending toward the bulb (52),
the side lens (62) extending rearward from the light entrance portion (62a).

8. The lighting equipment according to Claim 7, further comprising a lens frame (64) disposed inside the lens cover (66) and attached to the side lens (62), wherein the lens frame (64) has a partitioning portion (64d) covering the light entrance portion (62a).

9. The lighting equipment according to Claim 7, wherein the side lens (62) becomes gradually narrower as a distance from the light entrance portion (62a) increases.

10. A motorcycle comprising the lighting equipment according to one of Claims 1 through 9.

11. The motorcycle according to Claim 10, comprising a pair of the lighting equipment,
wherein
in each of the lighting equipment,
the base portion and the light emitting portion (52b) are arranged in a forward travelling direction of the motorcycle.

## Patentansprüche

1. Beleuchtungsvorrichtung für ein Motorrad, umfassend:
eine Birne (52) mit einem Basisteil (52a) und einem vor dem Basisteil (52a) vorgesehenen Lichtemissionsteil (52b), und
eine seitliche Linse (62), die lateral zu der Birne (52) vorgesehen ist,
einen Reflektor (68), der einen Birnenhalteteil (68a) zum Halten des Basisteils (52a), einen Reflexionsflächenteil (68b), der sich von dem Birnenhalteteil (68a) nach vorne erstreckt, einen ringförmigen Bodenteil (68c), der sich von dem Birnenhalteteil (68a) radial nach außen erstreckt, und eine Aussparung (68d), die in dem Reflexionsflächenteil (68b) ausgebildet ist, umfasst und dazu dient, einen Teil des Lichts von dem Lichtemissionsteil (52b) zu der seitlichen Linse (62) zuzuführen, während er die Birne hält,
eine Linsenabdeckung (66), die die seitliche Linse hält und einen Teil einer Außenform des Motorrads bildet,
**dadurch gekennzeichnet, dass** die Birne (52) derart angeordnet ist, dass die Richtung, in welcher der Lichtemissionsteil (52b) von dem Basisteil (52a) ausgerichtet ist, die Vorne-Hinten-Richtung des Motorrads ist,
die Aussparung (68d) bis zu dem Birnenhalteteil (68a) reicht und gestattet, dass sich ein Teil des Lichts von der Birne (52) in einer Richtung schräg nach hinten von der Birne (52) fortpflanzt.

2. Beleuchtungsvorrichtung nach Anspruch 1, die weiterhin umfasst:
eine vordere Linse (58), die vor der Birne (52) vorgesehen ist und durch die Linsenabdeckung (66) bedeckt wird,
einen Linsenrahmen (64), der in der Linsenabdeckung (66) angeordnet ist, und
ein Gehäuse (56), das eine Nut (72) aufweist, die sich von der Aussparung (68d) derart erstreckt, dass von dem Lichtemissionsteil (52b) emittiertes Licht über die Aussparung (68d) in die Nut (72) eingeführt wird,
wobei der Linsenrahmen (64) einen Unterteilungsteil (64d) aufweist, der zwischen der vorderen Linse (58) und der seitlichen Linse (62) vorgesehen ist.

3. Beleuchtungsvorrichtung nach Anspruch 2, wobei die Linsenabdeckung (66) eine gekrümmte Fläche aufweist.

4. Beleuchtungsvorrichtung nach Anspruch 2, wobei die Nut (72) eine Fläche aufweist, die mit einer Farbe zum Reduzieren der Lichtreflexion beschichtet ist.

5. Beleuchtungsvorrichtung nach Anspruch 1, wobei die seitliche Linse (62) einen Linsenschliff aufweist, der die nach vorne gerichtete Ausgabe des Lichts, nachdem das Licht von der Birne (52) in die seitliche Linse (62) eingetreten ist, reduziert.

6. Beleuchtungsvorrichtung nach Anspruch 5, die weiterhin eine vordere Linse (58) aufweist, die vor der Birne (52) vorgesehen ist und durch die Linsenabdeckung (66) bedeckt wird, wobei:
die vordere Linse (58) und die seitliche Linse (62) jeweils separate Glieder sind.

7. Beleuchtungsvorrichtung nach Anspruch 5, wobei die seitliche Linse (62) einen Lichteintrittsteil (62a) aufweist, der sich zu der Birne (52) erstreckt, wobei sich die seitliche Linse (62) von dem Lichteintrittsteil (62a) nach hinten erstreckt.

8. Beleuchtungsvorrichtung nach Anspruch 7, die weiterhin einen Linsenrahmen (64) umfasst, der in der Linsenabdeckung (66) angeordnet und an der seitlichen Linse (62) befestigt ist, wobei der Linsenrahmen (64) einen Unterteilungsteil (64d) aufweist, der den Lichteintrittsteil (62a) bedeckt.

9. Beleuchtungsvorrichtung nach Anspruch 7, wobei die seitliche Linse (62) mit zunehmender Distanz von dem Lichteintrittsteil (62a) allmählich schmäler wird.

10. Motorrad, das die Beleuchtungsvorrichtung eines der Ansprüche 1 bis 9 umfasst.

11. Motorrad nach Anspruch 10, das ein Paar der Beleuchtungsvorrichtungen umfasst, wobei:
in jeder Beleuchtungsvorrichtung der Basisteil und der Lichtemissionsteil (52b) in einer Vorwärtsfahrtrichtung des Motorrads angeordnet sind.

## Revendications

1. Équipement d'éclairage pour une motocyclette, comprenant :
une ampoule (52) comportant une partie de base (52a) et une partie d'émission de lumière (52b) prévue devant la partie de base (52a) ; et
une lentille latérale (62) prévue latéralement par rapport à l'ampoule (52)
un réflecteur (68) comportant une partie support d'ampoule (68a) supportant la partie de base (52a) une partie de surface de réflexion (68b) s'étendant en avant de la partie support d'ampoule (68a), une partie inférieure annulaire (68c) s'étendant radialement vers l'extérieur par rapport à la partie support d'ampoule (68a) et une découpe (68d) formée dans la partie de surface de réflexion (68b) ; pour fournir une partie de la lumière provenant de la partie d'émission de lumière (52b) à la lentille latérale (62) tout en maintenant l'ampoule,
un couvercle de lentille (66) recouvrant la lentille latérale tout en constituant une partie de la forme extérieure de la motocyclette,
**caractérisé en ce que** l'ampoule (52) est disposée de sorte que la direction dans laquelle la partie d'émission de lumière (52b) est orientée par rapport à la partie de base (52a) est la direction avant arrière de la motocyclette ;
la découpe (68d) atteint la partie support d'ampoule (68a) et permet à une partie de la lumière provenant de l'ampoule (52) de sortir de l'ampoule (52) dans une direction obliquement vers l'arrière.

2. Équipement d'éclairage selon la revendication 1, comprenant en outre :
une lentille avant (58) prévue devant l'ampoule (52) et recouverte par le couvercle de lentille (66) ;
un cadre de lentille (64) disposé à l'intérieur du couvercle de lentille (66) ; et
un boîtier (56) comportant une rainure (72) s'étendant depuis la découpe (68d) de sorte que la lumière émise par la partie d'émission de lumière (52b) est introduite dans la rainure (72) par l'intermédiaire de la découpe (68d) dans lequel
le cadre de lentille (64) comporte une partie de séparation (64d) prévue entre la lentille avant (58) et la lentille latérale (62).

3. Équipement d'éclairage selon la revendication 2, dans lequel le couvercle de lentille (66) possède une surface incurvée.

4. Équipement d'éclairage selon la revendication 2, dans lequel la rainure (72) possède une surface recouverte d'une couleur pour diminuer la réflexion de la lumière.

5. Équipement d'éclairage selon la revendication 1, dans lequel la lentille latérale (62) comporte une découpe de lentille pour diminuer la fourniture de lumière vers l'avant après que la lumière provenant de l'ampoule (52) a pénétré dans la lentille latérale (62).

6. Équipement d'éclairage selon la revendication 5, comprenant en outre une lentille avant (58) prévue devant l'ampoule (52) et recouverte par le couvercle de lentille (66), dans lequel
la lentille avant (58) et la lentille latérale (62) sont des éléments séparés l'un de l'autre.

7. Équipement d'éclairage selon la revendication 5, dans lequel la lentille latérale (62) comporte une partie d'entrée de lumière (62a) s'étendant vers l'ampoule (52),
la lentille latérale (62) s'étendant vers l'arrière depuis la partie d'entrée de lumière (62a).

8. Équipement d'éclairage selon la revendication 7, comprenant en outre un cadre de lentille (64) disposé à l'intérieur du couvercle de lentille (66) et fixé à la lentille latérale (62), dans lequel le cadre de lentille (64) comporte une partie de séparation (64d) recouvrant la partie d'entrée de lumière (62a).

9. Équipement d'éclairage selon la revendication 7, dans lequel la lentille latérale (62) devient progressivement plus étroite à mesure que la distance par rapport à la partie d'entrée de lumière (62a) augmente.

10. Motocyclette comprenant l'équipement d'éclairage selon l'une des revendications 1 à 9.

11. Motocyclette selon la revendication 10, comprenant une paire d'équipements d'éclairage, dans laquelle
dans chacun des équipements d'éclairage,
la partie de base et la partie d'émission de lumière (52b) sont agencées dans la direction du parcours vers l'avant de la motocyclette.
